# EUROPEAN PATENT SPECIFICATION

(11) **EP 4 026 254 B1**
(45) Date of publication and mention of the grant of the patent: **01.11.2023**
(21) Application number: 19766000.4
(22) Date of filing: 06.09.2019
(51) Int. Cl.: H04B 7/024, H04B 7/06

(54) **METHODS, COMPUTER PROGRAM AND RADIO NETWORK NODE FOR NULL-STEERING BEAMFORMING**
VERFAHREN, COMPUTERPROGRAMM UND FUNKNETZKNOTEN FÜR NULLLENKUNGSSTRAHLFORMUNG
PROCÉDÉS, PROGRAMME D'ORDINATEUR ET NOEUD DE RÉSEAU RADIO POUR FORMATION DE FAISCEAU À ORIENTATION NULLE

(43) Date of publication of application: 13.07.2022
(73) Proprietor: TELEFONAKTIEBOLAGET LM ERICSSON (PUBL), 164 83 Stockholm (SE)
(72) Inventor: GUNTUPALLI, Lakshmikanth, 226 42 Lund (SE); SUNDMAN, Dennis, 191 47 Sollentuna (SE); WILHELMSSON, Leif, 222 20 Lund (SE)
(74) Representative: Ericsson
(86) International application number: PCT/EP2019/073859
(87) International publication number: WO 2021/043420

(56) References cited:
- WO-A1-2011/071470
- WO-A1-2016/206032
- US-A1- 2004 248 518
- US-A1- 2015 030 094
- ZUBOW ANATOLIJ: "Downlink MIMO in IEEE 802.11ac-Based Infrastructure Networks", 2015 IEEE GLOBAL COMMUNICATIONS CONFERENCE (GLOBECOM), IEEE, 6 December 2015 (2015-12-06), pages 1-7, XP032872118, DOI: 10.1109/GLOCOM.2014.7416948 [retrieved on 2016-02-23]

## Description

### Technical field

The present invention generally relates to methods for a radio network node, a computer program for implementing the methods, and a radio network node. In particular, the present invention relates to a method and a first radio network node arranged to assign a beam pattern with null-steering beamforming towards a neighbouring second radio network node.

### Background

There is an increased interest in using unlicensed bands, like the 2.45 GHz ISM (Industrial Scientific and Medicine) band and the 5 GHz bands. To ensure coexistence between different devices using a certain standard as well as between devices using different standards, some kind of co-existence mechanism needs to be employed. One commonly used co-existence mechanism is listen before talk (LBT), also known as carrier sense multiple access with collision avoidance (CSMA/CA). In CSMA/CA, a device that intends to make use of the wireless medium for transmission senses the channel and determines whether the channel is busy (in use or occupied) or idle (unoccupied). If the channel is determined to be busy, the transmission is deferred whereas if the channel is determined to be idle a transmission is initiated. Just as the name suggests, the idea of CSMA/CA is to avoid collisions by only initiating a transmission when the channel is not busy.

Historically, the 5 GHz band was almost exclusively used by the IEEE 802.11 standard, e.g. IEEE 802.11a, IEEE 802.11n, and IEEE 802.11ac. Before the introduction of IEEE 802.11ac, all transmissions were between one transmitter and one receiver. In addition, the channel access was typically distributed using the Distributed Coordination Function (DCF). Letting the individual devices contend for the channel when they have something to send simplifies the system design. However, with increased usage of the spectrum, it has become apparent that a more scheduled approach may provide higher spectrum efficiency. Specifically, it is desirable to support transmission from one transmitter to many receivers as well as from many transmitters to one receiver.

In radio, multiple-input and multiple-output (MIMO) is a method for multiplying the capacity of a radio link using multiple transmission and receiving antennas. MIMO has become a well-used element in a variety of wireless communication standards.

In IEEE 802.11ac, transmission from one transmitter to up to 4 receivers is supported by means of multi-user MIMO (MU-MIMO) in the down-link (DL), i.e., from the access point (AP) to the stations (STAs). With the introduction of IEEE 802.11ax, also transmissions from many transmitters to one receiver is enabled by means of uplink (UL) MU-MIMO. In addition, in IEEE 802.11ax, orthogonal frequency division multiple access (OFDMA) is used for both DL and UL, allowing for multi-user transmission in both UL and DL. OFDMA may also be combined with MU-MIMO such that some sub-channels may be used for MU-MIMO whereas others are used for single user transmission.

Multi-user LTL transmission by necessity requires scheduling by the AP due to that the different transmitted signals should be received reasonably aligned in time, frequency, and power. MU-DL transmission is by default scheduled by the AP. The implication of moving in the direction of adopting more MU transmissions is that the AP will be increasingly more in control of the channel access and what transmissions are to take place. It is probably fair to say that the IEEE 802.11 standard is moving towards being more similar to the cellular standards developed in 3^{rd} Generation Partnership Project (3GPP), where the base stations controls all the transmissions.

Although a more scheduled approach, following the same spirit as the cellular standards, potentially can lead to higher spectrum efficiency, a fundamental difference is that the cellular standards are developed for operation in licensed spectrum. Even though a system operating in licensed spectrum also suffer from interference from other cells, both co-channel interference and adjacent channel interference, the interference level is to certain extent known and under control.

Furthermore, multiple antenna capability plays a vital role in achieving high capacity and reliable transmission in wireless communication networks. High capacity is achieved by employing the techniques such as spatial multiplexing, whereas transmission with spatial diversity improves the reliability. In general, interference is one of the major obstructing factors to limit the capacity and reliability. Beamforming is a popular technique that can be employed to limit the effect of interference in multi-antenna systems. Beamforming uses space signal processing in order to adjust the weights in the antenna array to direct the energy in a certain direction. Similarly, the beamforming weights can be adjusted to place nulls in different directions. However, placing nulls typically would be based on rather specific knowledge, e.g. based on a UL/DL structure.

US 2018/0026362 A1 discloses an approach for providing a lowered antenna gain in at least one direction. The direction can be determined when doing cell planning.

WO 2011/071470 A1 discloses an approach of reducing interference between coordinated base stations through use of beamforming.

US 2004/0248518 A1 discloses a wireless communication apparatus with beamforming capabilities.

ZUBOW ANATOLIJ, "Downlink MIMO in IEEE 802.11ac-Based Infrastructure Networks", 2015 IEEE GLOBAL COMMUNICATIONS CONFERENCE (GLOBECOM), IEEE, DOI: 10.1109/ GLOCOM.2014.7416948, discloses that an unused degree of freedom of lightly loaded APs is utilized to perform interference management by means of null steering towards STAs in highly loaded adjacent cells in IEEE 802.11ac-based networks.

The problem with the existing solutions for reducing the effect of interference is that they apply techniques once the transmission starts or during the transmission only for a cell or basic service set (BSS) where they belong to. However, behaving nicely to overlapping cells or BSSs cannot be done in the same way. Moreover, those techniques rely on limited information. Then, they may not function properly. Consequently, the link performance as well as the system performance can be expected to be possible to improve for such overlaps.

The above information disclosed in this Background section is only for enhancement of understanding of the background of the invention and therefore it may contain information that does not form the prior art that is already known to a person of ordinary skill in the art.

### Summary

The invention is based on the inventors' understanding that adjustment of nulls of AP's antennas towards sufficiently loaded neighbouring nodes may provide for that the interference can be avoided or at least reduced for the simultaneous transmissions by those nodes.

According to a first aspect, there is provided a method of assigning a beam pattern with null-steering beamforming from a first radio network node towards a second radio network node. The method comprises determining a direction to the neighbouring second radio network node, determining an indication on traffic load for the second radio network node, and determining, from the direction and traffic load, a direction for a null of the null-steering beamforming.

The determining of the direction may be made from reception of beacons from the second radio network node. Alternatively, the determining of the direction may be made from a signalling interface between the first radio network node and the second radio network node.

The determining of the indication on traffic load may be made from information in beacon from the second radio network node. The information in the beacon may comprise any one of number of stations associated to the second radio network node, and channel utilization.

The determining of the indication on traffic load may be made from a signalling interface between the first radio network node and the second radio network node.

The determining of the direction for a null may comprise prioritizing a direction, among directions towards a plurality of neighbouring network nodes, wherein the prioritizing comprises prioritizing the direction based on estimated distance from a neighbouring radio network node based on the reception of the beacon from the neighbouring radio network node, wherein an estimated smaller distance is prioritized over an estimated larger distance.

Each of the first radio network node and the second neighbouring radio network node may form a basic service set, BSS, and the first network node and the second network node may form an overlapping BSS, OBSS, in a communication system for wireless local area network service.

For omni-directional transmissions using cyclic delay diversity, the method may comprise assigning a null in the determined direction for the null, and randomising subcarriers for other directions than the at least one direction for the null.

According to a second aspect, there is provided a method of signal transmission from a radio network node. The method comprises composing a frame to be sent, assigning a beam pattern with null-steering beamforming according to the first aspect, and transmitting the frame with the assigned beam pattern.

According to a third aspect, there is provided a computer program comprising instructions which, when executed on a processor of a radio network node, causes the radio network node to perform the method according to any of the first and second aspects.

According to a fourth aspect, there is provided a first radio network node arranged to assign a beam pattern with null-steering beamforming towards a neighbouring second radio network node. The first radio network node comprises a controller and a transceiver. The controller is arranged to compose a frame to be sent, determine a direction to the second radio network node, determine an indication on traffic load for the second radio network node, and determine, from the direction and traffic load, a direction for a null of the null-steering beamforming. The transceiver is arranged to transmit the frame through a signal where the signal has null-steering beamforming in the direction.

The first radio network node may be arranged to determine the direction from reception of beacons, by the transceiver, from the second radio network node. Alternatively, the first radio network node may be arranged to determine the direction from a signalling interface between the first radio network node and the second radio network node.

The first radio network node my be arranged to determine the indication on traffic load from information in a beacon, received by the transceiver, from the second radio network node. The information in the beacon may comprise any one of number of stations associated to the second radio network node, and channel utilization.

The first radio network node may be arranged to determine the indication on traffic load from a signalling interface between the first radio network node and the second radio network node.

The determination of the direction for a null may comprise prioritizing a direction, among directions towards a plurality of neighbouring network nodes, wherein the prioritizing may comprise prioritizing the direction based on estimated distance from a neighbouring radio network node based on the reception of the beacon, by the transceiver, from the neighbouring radio network node, wherein an estimated smaller distance may be prioritized over an estimated larger distance.

Each of the first radio network node and the second neighbouring radio network node may form a basic service set, BSS, and the first network node and the second network node may form an overlapping BSS, OBSS, in a communication system for wireless local area network service.

For omni-directional transmissions using cyclic delay diversity, the first radio network node may be arranged to assign a null in the determined direction for the null, and randomise subcarriers for other directions than the at least one direction for the null.

### Brief description of the drawings

The above, as well as additional objects, features and advantages of the present invention, will be better understood through the following illustrative and non-limiting detailed description of preferred embodiments of the present invention, with reference to the appended drawings.
Fig. 1 is a flow chart illustrating methods according to embodiments.
Fig. 2 is a block diagram schematically illustrating a network node according to an embodiment.
Fig. 3 schematically illustrates a computer-readable medium and a processing device.
Fig. 4 schematically illustrates null adjustment in relation to neighbouring network nodes.
Fig. 5 schematically illustrates an example where null adjustment provides a benefit.
Fig. 6 schematically illustrates an example of null adjustment taking traffic load into account.
Fig. 7 illustrates an example of null adjustment in a cyclic shift diversity case of providing omni-directional transmission.

### Detailed description

In IEEE 802.11ax, it is preferred that the AP is scheduling both LTL and DL. The AP will by necessity schedule the DL, but in order to allow for MU transmission in the UL, also the UL must be scheduled by the AP.

In IEEE 802.11ax, the UL scheduling is achieved by the so-called trigger frame (TF). A TF is sent from the AP to the STAs that are scheduled for LTL transmission, indicating the for the UL transmission essential parameters. Such essential parameters may e.g. be what UL resources to use and what transmission power to use.

Before scheduling a DL transmission, the AP may send a request-to-send (RTS) packet to the STAs to whom it targets to send DL data. STAs that are addressed by this RTS packet and are able to decode it will respond with a clear-to-send (CTS) packet. The reason for this RTS-CTS exchange is that the DL transmission from the AP may not be heard by STAs not associated with the AP, and these STAs could then potentially initiate a transmission which would interfere with the DL transmission. The CTS packet sent from the different addressed STAs are identical and the AP can therefore not in the general case identify exactly which ones of the addressed STAs responded with a CTS, only whether at least one response has been received. This procedure extends the single user RTS-CTS mechanism existing in previous versions of the IEEE 802.11 standard, and is called multi-user RTS-CTS (MU-RTS-CTS).

There are a few shortcomings with performing the transmissions as described above. The first shortcoming is that the AP may cause interference to neighbouring BSSs in the direction of DL transmissions and also the STAs may generate interference in LTL transmissions. If the STAs belonging to neighbouring BSS are in the direction of transmission, then they may suffer from interference. Thereby, transmissions in those surrounding BSS may fail. The second shortcoming is that STAs in the neighboring BSS may experience an interference level such that the channel is determined to be busy. Due to failures from interference, retransmissions may have to be performed until the current data frames are delivered. This makes nodes to have the same old data for long. Therefore, STAs are always contending for channel. To address the above mentioned short-comings this disclosure proposes to perform null adjustment (NA) by an AP in the direction where it could probably cause interference.

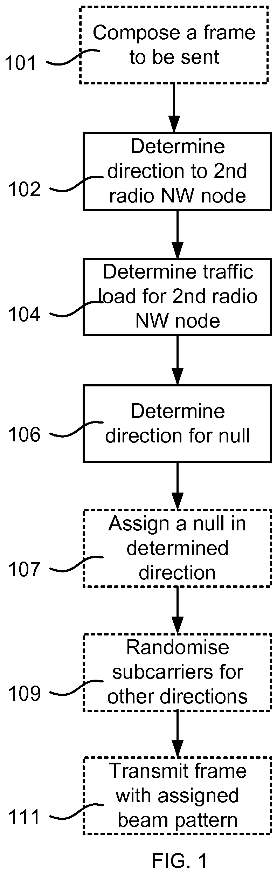

Fig. 1 is a flow chart illustrating methods according to embodiments. The boxes with dashed lines indicate optional features which are used in various combinations in some example embodiments below.

According to one embodiment, there is provided a method of assigning a beam pattern with null-steering beamforming from a first radio network node in relation to a neighbouring second radio network node. The context is that the neighbouring radio network nodes are not aware of each other through any cell planning, the first radio network node has some kind of antenna array arrangement both for reception and transmission, and the neighbouring radio network nodes operate in unlicensed band. That is, the first network node needs to collect information and act upon that. This is performed by the first radio network node when it determines 102 a direction to the second radio network node. This determination can be made by the first radio network node by listening for transmissions from the second radio network node, e.g. beacons transmitted by the second radio network node. The direction can be determined by observing phase relations of the reception in the array antenna. Here, the explanation is given for a relation to a second radio network node, for the sake of easier understanding, but the same principles apply for relations with a plurality of neighbouring radio network nodes. That is, the first radio network node may receive signals from a plurality of radio network nodes, but all of them may not be necessary to take any actions on. The neighbouring radio network nodes may for example be too distant, i.e. signals to/from them are weak, to have any practical impact. Still, considering also radio network nodes being in closer, there may not be any practical reason to take any special actions in case there is no active transmissions going on. The inventors therefore suggest in this disclosure that network load of the neighbouring radio network nodes should be considered. Therefore, the first radio network node determines 104 traffic load for the second radio network node. For example, beacons provided by radio network nodes may provide information about number of associated STAs and channel utilization, for example expressed as percentage of time the channel is used. One or more of such provided information may be taken as a metric for the traffic load of the neighbouring radio network node. The first radio network node may from the determined traffic load determine whether any action is to be taken, i.e. neighbouring radio network nodes having a traffic load below a threshold may be ignored. For neighbouring radio network nodes having a traffic load, e.g. over the threshold, the action taken may be adapted based on the determined traffic load. Thus, a direction towards the neighbouring radio network nodes, in this example the second radio network node, for a reduction in transmit power by beamforming is determined 106. For such neighbouring radio network nodes, in this example the second radio network node, properties of a reduced signal power are assigned in the direction of the neighbouring radio network node. The properties of the reduction, in sense of attenuation and angular width in the determined direction, may be based on the determined traffic load.

According to one embodiment, a transmission by the first radio network node is to be performed omnidirectionally, which may be performed by applying cyclic shift diversity which provides for that each subcarrier becomes beamformed in a random direction. Consider however that the determination 102 of a direction, determination 104 of traffic load for a neighbouring radio network node, and determination 106 of a direction of reduced transmission is performed as above. It is then desired to provide both the omnidirectional transmission and the reduced transmission in the determined direction. This is achieved by assigning 107 the reduced transmission, e.g. a null, in the determined direction, and randomising 109 all other directions.

The flow chart of Fig. 1 also shows a method of transmission of a frame. The first radio network node composes 101 a frame to be sent. The determination 102 of a direction, determination 104 of traffic load for a neighbouring radio network node, and determination 106 of a direction of reduced transmission is performed as demonstrated above to assign a desired beam pattern. The frame is then transmitted 111 with the assigned beam pattern. The assigning of the beam pattern can for example be provided as demonstrated with reference to the assigning 107 the reduced transmission, e.g. a null, in the determined direction, and randomising 109 the subcarriers for all other directions as demonstrated above for providing an almost omnidirectional transmission of the frame.

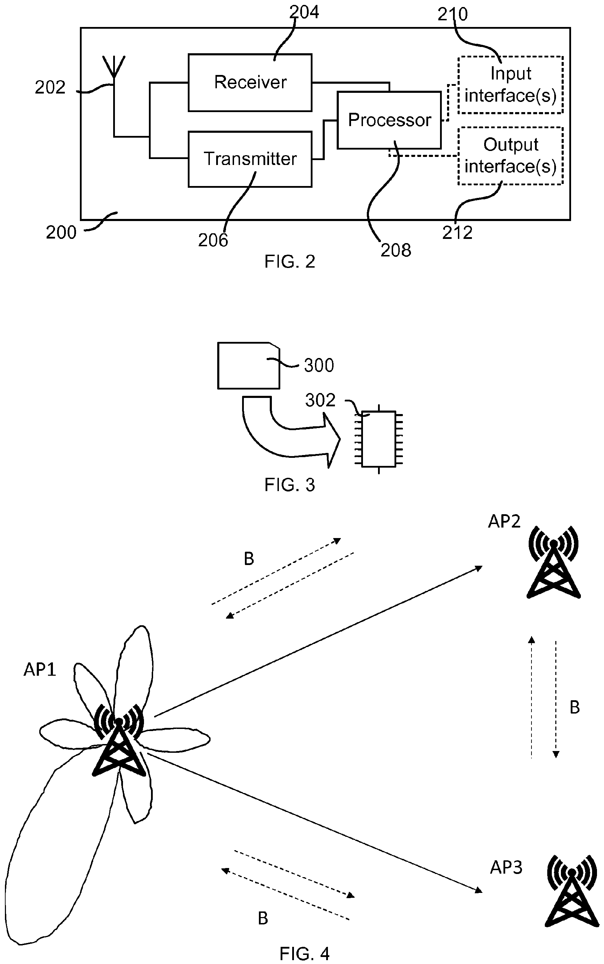

Fig. 2 is a block diagram schematically illustrating a radio network node according to an embodiment. The radio network node comprises an antenna arrangement 202, a receiver 204 connected to the antenna arrangement 202, a transmitter 206 connected to the antenna arrangement 202, a processing element 208 which may comprise one or more circuits, one or more input interfaces 210 and one or more output interfaces 212. The interfaces 210, 212 can be operator interfaces and/or signal interfaces, e.g. electrical or optical. The radio network node 200 may be arranged to operate in a communication network based on basic service sets or cells. In particular, by the processing element 208 being arranged to perform the embodiments demonstrated with reference to Fig. 1, the radio network node is capable of reducing interference with neighbouring BSSs or cells. The processing element 208 can also fulfil a multitude of tasks, ranging from signal processing to enable reception and transmission since it is connected to the receiver 204 and transmitter 206, executing applications, controlling the interfaces 210, 212, etc.

The methods according to the present invention is suitable for implementation with aid of processing means, such as computers and/or processors, especially for the case where the processing element 208 demonstrated above comprises a processor handling the determination of directions and controlling nulls as discussed above. Therefore, there is provided computer programs, comprising instructions arranged to cause the processing means, processor, or computer to perform the steps of any of the methods according to any of the embodiments described with reference to Fig. 1 to 6. The computer programs preferably comprise program code which is stored on a computer readable medium 300, as illustrated in Fig. 3, which can be loaded and executed by a processing means, processor, or computer 302 to cause it to perform the methods, respectively, according to embodiments of the present invention, preferably as any of the embodiments described with reference to Fig. 1. The computer 302 and computer program product 300 can be arranged to execute the program code sequentially where actions of the any of the methods are performed stepwise. The processing means, processor, or computer 302 is preferably what normally is referred to as an embedded system. Thus, the depicted computer readable medium 300 and computer 302 in Fig. 3 should be construed to be for illustrative purposes only to provide understanding of the principle, and not to be construed as any direct illustration of the elements.

Considering the methods, devices and computer programs demonstrated above, a few examples will be given below for the further understanding of the features and benefits of the suggested approaches. For the sake of easier flow of the language in the description of the examples, the reduced transmission in the determined direction(s) will be referred to a "null", "nulling", etc. but should be considered as a reduction, which in its ultimate form also includes that no power is provided in that direction, but also may include any significant reduction.

Fig. 4 schematically illustrates null adjustment (NA) in relation to neighbouring network nodes. For providing a tangible example, a WiFi scenario with three access points (APs) with possibility of performing NA is illustrated. Generally, an IEEE 802.11 AP sends a Beacon B frame periodically in the BSS. This beacon B frame contains the network information such as service set identification number (SSID). The main purpose of sending these frames is to synchronize the associated STAs with it. In the OBSS case, it is possible that the B frame sent from one AP can be heard by an AP or non-AP STAs of an OBSS if they are in the transmission range of each other. Then, the multi-antenna capable AP can obtain information directly from its neighbouring APs and adjusts its antenna nulls towards the direction where the STAs associated to the other APs may be interfered. As a result, the interference at the neighbouring APs will be alleviated and provides the room for executing simultaneous transmissions. Of course, for the transmissions to its own STAs, directional beamforming is used while the nulls are adjusted to STAs in OBSS.

Prior to the beginning of data transmission, the AP first determines the directions for where to place its nulls in order to reduce the interference in these directions where is it believed that the interference will make most harm. One example of the procedure for adjusting nulls is described below:
1. All APs broadcast beacon B messages periodically; typically every 100ms. The beacon B contains the information of the number of STAs associated with the source AP as well as the load and channel utilization.
2. After receiving the beacon B, the AP learns the information about other APs of the OBSSs. It is also here assumed that the AP when receiving the beacon B can obtain the information of in which direction the corresponding AP sending the beacon B is.
3. Based on the information about the load and the channel utilization of the OBSSs, the AP decides how to perform null adjustment with respect to the neighbouring APs. Specifically, the AP may decide to place nulls only in directions where the OBSS activity is sufficiently high and do nothing at all if the activities in an OBSS is below a certain level.

The NA can be performed in one of the many existing ways, for instance using Zero-forcing algorithm. The proposed solution is not concerned with how the nulling is performed, but merely concerned with how to determine in what directions to place nulls. Thus, the invention is applicable regardless of how the NA is performed.

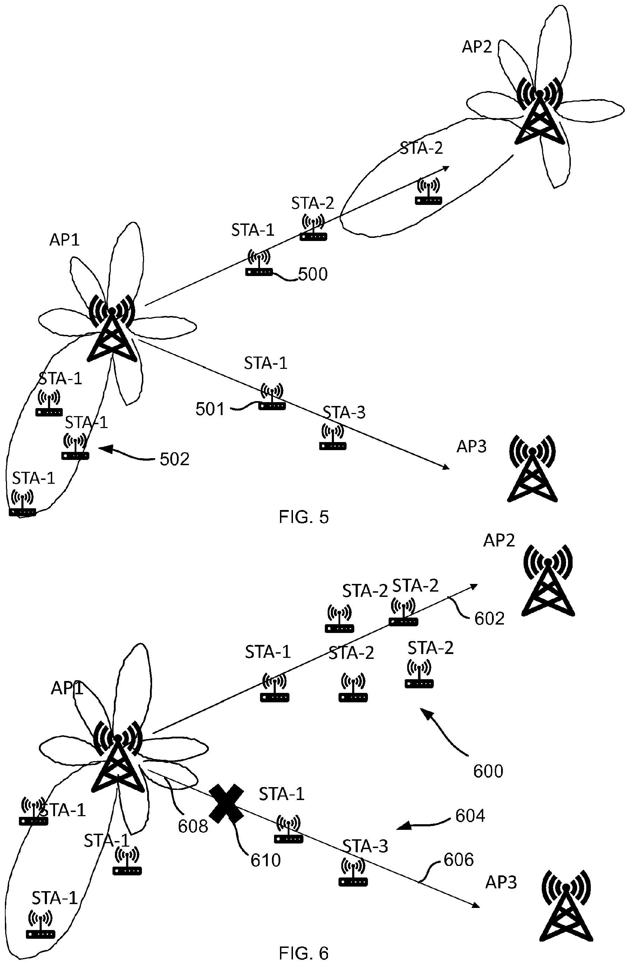

One benefit which may be brought by NA is interference mitigation for the neighbouring APs. The NA can be performed by an AP for both LTL and DL transmissions. In case of DL transmissions, the purpose of employing NA is to minimize interference towards the neighbouring APs. In Fig. 5, AP1 performs NA for AP2 and AP3. Here, STA-1 denotes a STA associated with AP1, STA-2 denotes a STA associated with AP2, etc. In the direction of AP2, the interference due to a STA-1 500 close to STAs-2 and STA-1 501 close to STA-3 is minimized as the transmissions are not possible at that STAs-1 500, 501.

Similarly, for UL transmissions, utilizing NA helps to reduce the experienced interference at the performing APs from the determined direction. In any case, NA directions need to be determined prior to the transmissions.

One other benefit which may be provided is to lower the competition for channel access inside the BSS. Since the STAs in the direction of NA cannot transmit and receive from the AP, they do not affect the transmissions to or from AP. In that case, the competition for the channel will be there primarily among the nodes which are not in the NA direction. Thus, the collision probability of the competing STAs may be decreased, which can probably enhance throughput. In Fig. 5, only STAs-1 502 compete for accessing the channel to/from AP1.

One benefit may be to provide the chance for other APs to improve the performance by utilizing the NA direction efficiently. The APs which are getting help from the NA performing AP can even improve their performance further, for example throughput, by placing directional beamforming in the same direction. As illustrated in Fig. 5, AP2 gains more by placing its main lobe in the direction of NA from AP1. Similarly, AP3 can also do the same. This can for example be a consequence by the AP1 limiting its transmission of beacon in the directions towards AP2 and/or AP3.

In some of the embodiments discussed above, an AP performs NA toward other APs in the OBSS without considering the traffic conditions at STAs in that direction. Moreover, if there are more neighbouring APs than the AP can help by providing limitations of power in their directions, then the AP may select the neighbouring APs to help randomly or in the order they were detected. Actually, the number of APs for which NA is performed may be decided on the number nulls supported by antenna, e.g. number of antenna elements and corresponding processing means for forming radiation pattern. If an AP selects a set of neighbouring APs randomly from the available ones in the OBSS, in case that the selected neighbouring APs do not have many STAs and the traffic load is very low in that direction, wherein the performance limitations due to the NA may be more than gained at the neighbouring BSSs, then the performed NA is not fully utilized.

Therefore, in order to further improve the gain obtained from NA, this disclosure proposes embodiments to select the directions based on the traffic load. Since there may be many OBSSs, information obtained from the respective beacons may be used to determine whether it is necessary to place a null in a certain direction based on the load in the corresponding OBSS. As the broadcasting message B may contain the information of the number of STAs associated with a neighbouring AP, the AP can choose the directions towards neighbouring APs with larger traffic loads. Then, the performance of co-BSSs in that direction might be maximized. Similarly, in the UL transmission, the AP performing NA can take the advantage of interference mitigation while it is receiving the frames from STAs.

A traffic load adaptive NA is expected to provide enhancement in the network performance. As depicted in Fig. 6, it is better for AP1 to execute NA in the direction towards AP2 since it is associated with four STA-2s 600 in the showed direction 602. In general, higher STA density generates more interference in DL transmissions. During the DL transmissions, carrying out NA alleviates the interference for the targeted APs in the OBSS. Similarly, in the UL transmissions, the area with more STAs gets more benefit. Hence it makes sense to implement NA in the heavy traffic load areas. In the same figure, AP3 has few STA-3s 604 and conducting NA in this direction will not bring much benefit to performing NA both in the direction 602 towards AP2 and the direction 606 towards AP3. Thus, no NA is performed in the direction 606 towards the AP3, as illustrated by lobe 608 and the crossover 610 of the direction line 606.

In any transmission of IEEE 802.11, certain transmission is uniformly transmitted. Examples of such transmissions are the preamble of each packet, beacons, and control frames, for example acknowledgements (ACKs) and clear channel assessment (CCA). In case the transmitter has multiple antennas, uniform transmission may be obtained through transmit diversity. With transmit diversity, unintended beamforming can be avoided by cyclic shift diversity (CSD). The effect of CSD is that every subcarrier gets beamformed in a random direction.

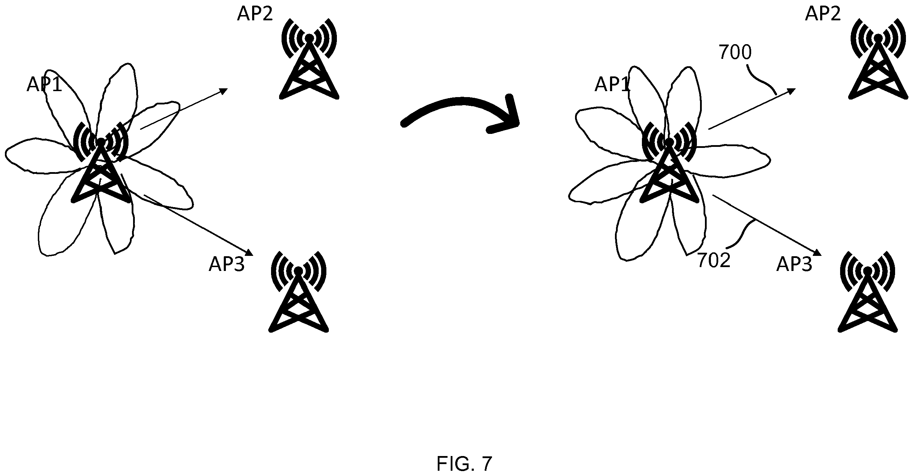

In some embodiments, the directive information of nearby BSS is used to modify the uniform transmissions. A null is placed in the direction towards nearby BSS while randomizing subcarriers for the remaining available directions. This is traditionally done for all transmissions using transmit diversity, except for the frames used by APs to detect other APs, such as some beacons. Note that the standard beacon should be transmitted using nulls, so that STAs associated with the correct AP. The frame used to detect directions of other APs may be a part of the beacon, i.e., a part not used by the STAs. Fig. 7 illustrates an example how a legacy transmission using CSD is modified to provide null towards neighbouring APs. To the left, the legacy beam pattern is illustrated, and to the right, the adapted beam pattern is illustrated. That is, in the adapted beam forming pattern, if the antenna system is properly calibrated, for example CCA may be performed such that nulls are placed in the directions 700, 702 of the neighbouring APs.

## Claims

1. A method of assigning a beam pattern with null-steering beamforming from a first radio network node towards a neighbouring second radio network node, the method comprising
determining (102) a direction to the neighbouring second radio network node;
determining (104) an indication on traffic load for the second radio network node;
determining (106), from the direction and traffic load, a direction for a null of the null-steering beamforming.

2. The method of claim 1, wherein the determining (106) of the direction is made from reception of beacons from the second radio network node.

3. The method of claim 1, wherein the determining (106) of the direction is made from a signalling interface between the first radio network node and the second radio network node.

4. The method of any one of claims 1 to 3, wherein the determining (104) of the indication on traffic load is made from information in beacon from the second radio network node.

5. The method of claim 4, wherein the information in the beacon comprises any one of
number of stations associated to the second radio network node; and
channel utilization.

6. The method of any one of claims 1 to 3, wherein the determining (104) of the indication on traffic load is made from a signalling interface between the first radio network node and the second radio network node.

7. The method of any one of claims 1 to 6, wherein the determining (106) of the direction for a null comprises prioritizing a direction, among directions towards a plurality of neighbouring network nodes, wherein the prioritizing comprises prioritizing the direction based on estimated distance from a neighbouring radio network node based on the reception of the beacon from the neighbouring radio network node, wherein an estimated smaller distance is prioritized over an estimated larger distance.

8. The method of any one of claims 1 to 7, wherein each of the first radio network node and the second neighbouring radio network node forms a basic service set, BSS, and the first network node and the second network node form an overlapping BSS, OBSS, in a communication system for wireless local area network service.

9. The method of any one of claims 1 to 8, wherein for omni-directional transmissions using cyclic delay diversity, the method comprises
assigning (107) a null in the determined direction for the null; and
randomising (109) subcarriers for other directions than the at least one direction for the null.

10. A method of signal transmission from a radio network node, the method comprising
composing (101) a frame to be sent;
assigning a beam pattern with null-steering beamforming according to any one of claims 1 to 9; and
transmitting (111) the frame with the assigned beam pattern.

11. A computer program comprising instructions which, when executed on a processor of a radio network node, causes the radio network node to perform the method according to any of claims 1 to 10.

12. A first radio network node (AP1, 200) arranged to assign a beam pattern with null-steering beamforming towards a neighbouring second radio network node (AP2), wherein the first radio network node (AP1, 200) comprises a controller (208) and a transceiver (204, 206), and wherein the controller (208) is arranged to
compose a frame to be sent;
determine a direction to the second radio network node;
determine an indication on traffic load for the second radio network node; and
determine, from the direction and traffic load, a direction (602) for a null of the null-steering beamforming,
and the transceiver (206) is arranged to transmit the frame through a signal where the signal has null-steering beamforming in the direction (602).

13. The first radio network node (AP1, 200) of claim 12, arranged to determine the direction from reception of beacons, by the transceiver (204), from the second radio network node (AP2).

14. The first radio network node (AP1, 200) of claim 12, arranged to determine the direction from a signalling interface (210, 212) between the first radio network node (AP1, 200) and the second radio network node (AP2).

15. The first radio network node (AP1, 200) of any one of claims 12 to 14, arranged to determine the indication on traffic load from information in a beacon, received by the transceiver (204), from the second radio network node (AP2).

16. The first radio network node (AP1, 200) of claim 15, wherein the information in the beacon comprises any one of
number of stations (600) associated to the second radio network node (AP2); and
channel utilization.

17. The first radio network node (AP1, 200) of any one of claims 12 to 14, arranged to determine the indication on traffic load from a signalling interface (210, 212) between the first radio network node (AP1, 200) and the second radio network node (AP2).

18. The first radio network node (AP1, 200) of any one of claims 12 to 17, wherein the determination of the direction for a null comprises prioritizing a direction, among directions towards a plurality of neighbouring network nodes (AP2, AP3), wherein the prioritizing comprises prioritizing the direction based on estimated distance from a neighbouring radio network node (AP2, AP3) based on the reception of the beacon, by the transceiver (204), from the neighbouring radio network node (AP2, AP3), wherein an estimated smaller distance is prioritized over an estimated larger distance.

19. The first radio network node (AP1, 200) of any one of claims 12 to 18, wherein each of the first radio network node (AP1, 200) and the second neighbouring radio network node (AP2) forms a basic service set, BSS, and the first network node (AP1, 200) and the second network node (AP2) form an overlapping BSS, OBSS, in a communication system for wireless local area network service.

20. The first radio network node (AP1, 200) of any one of claims 12 to 19, wherein for omni-directional transmissions using cyclic delay diversity, the first radio network node (AP1, 200) is arranged to
assign a null in the determined direction (602) for the null; and
randomise subcarriers for other directions than the at least one direction for the null.

## Patentansprüche

1. Verfahren zum Zuweisen eines Strahlmusters mit Nulllenkungsstrahlformung von einem ersten Funknetzwerkknoten zu einem benachbarten zweiten Funknetzwerkknoten, wobei das Verfahren umfasst
Bestimmen (102) einer Richtung zu dem benachbarten zweiten Funknetzwerkknoten;
Bestimmen (104) einer Verkehrslastangabe für den zweiten Funknetzwerkknoten;
Bestimmen (106), aus der Richtung und Verkehrslast, einer Richtung für eine Null der Nulllenkungsstrahlformung.

2. Verfahren nach Anspruch 1, wobei das Bestimmen (106) der Richtung auf Empfang von Beacons von dem zweiten Funknetzwerkknoten beruht.

3. Verfahren nach Anspruch 1, wobei das Bestimmen (106) der Richtung auf einer Signalisierungsschnittstelle zwischen dem ersten Funknetzwerkknoten und dem zweiten Funknetzwerkknoten beruht.

4. Verfahren nach einem der Ansprüche 1 bis 3, wobei das Bestimmen (104) der Verkehrslastangabe auf Informationen im Beacon von dem zweiten Funknetzwerkknoten beruht.

5. Verfahren nach Anspruch 4, wobei die Informationen in dem Beacon eines der Folgenden umfassen
Anzahl von Stationen, die dem zweiten Funknetzwerkknoten zugeordnet sind; und
Kanalnutzung.

6. Verfahren nach einem der Ansprüche 1 bis 3, wobei das Bestimmen (104) der Verkehrslastangabe auf einer Signalisierungsschnittstelle zwischen dem ersten Funknetzwerkknoten und dem zweiten Funknetzwerkknoten beruht.

7. Verfahren nach einem der Ansprüche 1 bis 6, wobei das Bestimmen (106) der Richtung für eine Null Priorisieren einer Richtung aus Richtungen zu einer Vielzahl benachbarter Netzwerkknoten umfasst, wobei das Priorisieren Priorisieren der Richtung basierend auf einer geschätzten Distanz von einem benachbarten Funknetzwerkknoten basierend auf dem Empfang des Beacons von dem benachbarten Funknetzwerkknoten umfasst, wobei eine geschätzte kleinere Distanz gegenüber einer geschätzten größeren Distanz priorisiert wird.

8. Verfahren nach einem der Ansprüche 1 bis 7, wobei jeder des ersten Funknetzwerkknotens und des zweiten benachbarten Funknetzwerkknotens einen Basisdienstsatz, BSS, bildet und der erste Netzwerkknoten und der zweite Netzwerkknoten einen überlappenden BSS, OBSS, in einem Kommunikationssystem für einen drahtlosen lokalen Netzwerkdienst bilden.

9. Verfahren nach einem der Ansprüche 1 bis 8, wobei für omnidirektionale Übertragungen, die zyklische Verzögerungsdiversität verwenden, das Verfahren Folgendes umfasst
Zuweisen (107) einer Null in der bestimmten Richtung für die Null; und
Randomisieren (109) von Subträgern für andere Richtungen als die mindestens eine Richtung für die Null.

10. Verfahren zur Signalübertragung von einem Funknetzwerkknoten, wobei das Verfahren Folgendes umfasst
Zusammenstellen (101) eines zu sendenden Frames;
Zuweisen eines Strahlmusters mit Nulllenkungsstrahlformung nach einem der Ansprüche 1 bis 9; und
Übertragen (111) des Frames mit dem zugewiesenen Strahlmuster.

11. Computerprogramm, das Anweisungen umfasst, die, wenn sie auf einem Prozessor eines Funknetzwerkknotens ausgeführt werden, den Funknetzwerkknoten veranlassen, das Verfahren nach einem der Ansprüche 1 bis 10 durchzuführen.

12. Erster Funknetzwerkknoten (AP1, 200), der angeordnet ist, ein Strahlmuster mit Nulllenkungsstrahlformung zu einem benachbarten zweiten Funknetzwerkknoten (AP2) zuzuweisen, wobei der erste Funknetzwerkknoten (AP1, 200) eine Steuereinheit (208) und einen Sender/Empfänger (204, 206) umfasst und wobei die Steuereinheit (208) angeordnet ist zum
Zusammenstellen eines zu sendenden Frames;
Bestimmen einer Richtung zu dem zweiten Funknetzwerkknoten;
Bestimmen einer Verkehrslastangabe für den zweiten Funknetzwerkknoten; und
Bestimmen, aus der Richtung und Verkehrslast, einer Richtung (602) für eine Null der Nulllenkungsstrahlformung,
und der Sender/Empfänger (206) angeordnet ist, den Frame durch ein Signal zu übertragen, wo das Signal Nulllenkungsstrahlformung in der Richtung (602) aufweist.

13. Erster Funknetzwerkknoten (AP1, 200) nach Anspruch 12, der angeordnet ist, die Richtung anhand eines Empfangs von Beacons, durch den Sender/Empfänger (204), von dem zweiten Funknetzwerkknoten (AP2) zu bestimmen.

14. Erster Funknetzwerkknoten (AP1, 200) nach Anspruch 12, der angeordnet ist, die Richtung anhand einer Signalisierungsschnittstelle (210, 212) zwischen dem ersten Funknetzwerkknoten (AP1, 200) und dem zweiten Funknetzwerkknoten (AP2) zu bestimmen.

15. Erster Funknetzwerkknoten (AP1, 200) nach einem der Ansprüche 12 bis 14, der angeordnet ist, die Verkehrslastangabe anhand von Informationen in einem Beacon, der durch den Sender/Empfänger (204) empfangen wird, von dem zweiten Funknetzwerkknoten (AP2) zu bestimmen.

16. Erster Funknetzwerkknoten (AP1, 200) nach Anspruch 15, wobei die Informationen in dem Beacon beliebige der Folgenden umfassen
Anzahl von Stationen (600), die dem zweiten Funknetzwerkknoten (AP2) zugeordnet sind; und
Kanalnutzung.

17. Erster Funknetzwerkknoten (AP1, 200) nach einem der Ansprüche 12 bis 14, der angeordnet ist, die Verkehrslastangabe anhand einer Signalisierungsschnittstelle (210, 212) zwischen dem ersten Funknetzwerkknoten (AP1, 200) und dem zweiten Funknetzwerkknoten (AP2) zu bestimmen.

18. Erster Funknetzwerkknoten (AP1, 200) nach einem der Ansprüche 12 bis 17, wobei die Bestimmung der Richtung für eine Null Priorisieren einer Richtung aus Richtungen zu einer Vielzahl benachbarter Netzwerkknoten (AP2, AP3) umfasst, wobei das Priorisieren Priorisieren der Richtung basierend auf einer geschätzten Distanz von einem benachbarten Funknetzwerkknoten (AP2, AP3) basierend auf dem Empfang des Beacons, durch den Sender/Empfänger (204), von dem benachbarten Funknetzwerkknoten (AP2, AP3) umfasst, wobei eine geschätzte kleinere Distanz gegenüber einer geschätzten größeren Distanz priorisiert wird.

19. Erster Funknetzwerkknoten (AP1, 200) nach einem der Ansprüche 12 bis 18, wobei jeder des ersten Funknetzwerkknotens (AP1, 200) und des zweiten benachbarten Funknetzwerkknotens (AP2) einen Basisdienstsatz, BSS, bildet und der erste Netzwerkknoten (AP1, 200) und der zweite Netzwerkknoten (AP2) einen überlappenden BSS, OBSS, in einem Kommunikationssystem für einen drahtlosen lokalen Netzwerkdienst bilden.

20. Erster Funknetzwerkknoten (AP1, 200) nach einem der Ansprüche 12 bis 19, wobei für omnidirektionale Übertragungen, die zyklische Verzögerungsdiversität verwenden, der erste Funknetzwerkknoten (AP1, 200) angeordnet ist zum
Zuweisen einer Null in der bestimmten Richtung (602) für die Null; und
Randomisieren von Subträgern für andere Richtungen als die mindestens eine Richtung für die Null.

## Revendications

1. Procédé d'attribution d'un diagramme de faisceau avec la formation de faisceau à orientation nulle d'un premier noeud de réseau radio vers un second noeud de réseau radio voisin, le procédé comprenant
la détermination (102) d'une direction vers le second noeud de réseau radio voisin ;
la détermination (104) d'une indication sur la charge de trafic pour le second nœud de réseau radio ;
la détermination (106), à partir de la direction et la charge de trafic, d'une direction pour un zéro de la formation de faisceau à orientation nulle.

2. Procédé selon la revendication 1, dans lequel la détermination (106) de la direction est réalisée à partir de la réception de balises du second nœud de réseau radio.

3. Procédé selon la revendication 1, dans lequel la détermination (106) de la direction est réalisée à partir d'une interface de signalisation entre le premier nœud de réseau radio et le second nœud de réseau radio.

4. Procédé selon l'une quelconque des revendications 1 à 3, dans lequel la détermination (104) de l'indication sur la charge de trafic est réalisée à partir de l'information dans la balise du second nœud de réseau radio.

5. Procédé selon la revendication 4, dans lequel l'information dans la balise comprend l'un quelconque de
nombre de stations associées au second nœud de réseau radio ; et
utilisation de canal.

6. Procédé selon l'une quelconque des revendications 1 à 3, dans lequel la détermination (104) de l'indication sur la charge de trafic est réalisée à partir d'une interface de signalisation entre le premier nœud de réseau radio et le second nœud de réseau radio.

7. Procédé selon l'une quelconque des revendications 1 à 6, dans lequel la détermination (106) de la direction pour un zéro comprend la priorisation d'une direction, parmi des directions vers une pluralité de noeuds de réseau voisins, dans lequel la priorisation comprend la priorisation de la direction sur la base de la distance estimée d'un nœud de réseau radio voisin sur la base de la réception de la balise depuis le nœud de réseau radio voisin, dans lequel une distance estimée plus petite est priorisée sur une distance estimée plus grande.

8. Procédé selon l'une quelconque des revendications 1 à 7, dans lequel chacun du premier nœud de réseau radio et du second nœud de réseau radio voisin forme un ensemble de service de base, BSS, et le premier nœud de réseau et le second nœud de réseau forment un BSS de chevauchement, OBSS, dans un système de communications pour un service de réseau local sans fil.

9. Procédé selon l'une quelconque des revendications 1 à 8, dans lequel pour des transmissions omnidirectionnelles utilisant la diversité de retard cyclique, le procédé comprend
l'attribution (107) d'un zéro dans la direction déterminée pour le zéro ; et
la randomisation (109) de sous-porteuses pour d'autres directions que l'au moins une direction pour le zéro.

10. Procédé de transmission de signal d'un nœud de réseau radio, le procédé comprenant
la composition (101) d'un cadre à envoyer ;
l'attribution d'un diagramme de faisceau avec une formation de faisceau à orientation nulle selon l'une quelconque des revendications 1 à 9 ; et
la transmission (111) du cadre avec le diagramme de faisceau attribué.

11. Programme informatique comprenant des instructions qui, lorsqu'elles sont exécutées sur un processeur d'un nœud de réseau radio, amène le nœud de réseau radio à réaliser le procédé selon l'une quelconque des revendications 1 à 10.

12. Premier nœud de réseau radio (AP1, 200) agencé pour attribuer un diagramme de faisceau avec la formation de faisceau à orientation nulle vers un second nœud de réseau radio voisin (AP2), dans lequel le premier nœud de réseau radio (AP1, 200) comprend un dispositif de commande (208) et un émetteur-récepteur (204, 206), et dans lequel le dispositif de commande (208) est agencé pour
composer un cadre à envoyer ;
déterminer une direction vers le second nœud de réseau radio ;
déterminer une indication sur la charge de trafic pour le second nœud de réseau radio ; et
déterminer, à partir de la direction et la charge de trafic, une direction (602) pour un zéro de la formation de faisceau à orientation nulle,
et l'émetteur-récepteur (206) est agencé pour transmettre le cadre à travers un signal où le signal présente une formation de faisceau à orientation nulle dans la direction (602).

13. Premier nœud de réseau radio (AP1, 200) selon la revendication 12, agencé pour déterminer la direction à partir de la réception de balises, par l'émetteur-récepteur (204), depuis le second nœud de réseau radio (AP2).

14. Premier nœud de réseau radio (AP1, 200) selon la revendication 12, agencé pour déterminer la direction à partir d'une interface de signalisation (210, 212) entre le premier nœud de réseau radio (AP1, 200) et le second nœud de réseau radio (AP2).

15. Premier nœud de réseau radio (AP1, 200) selon l'une quelconque des revendications 12 à 14, agencé pour déterminer l'indication sur la charge de trafic à partir de l'information dans une balise, reçue par l'émetteur-récepteur (204), depuis le second nœud de réseau radio (AP2).

16. Premier nœud de réseau radio (AP1, 200) selon la revendication 15, dans lequel l'information dans la balise comprend l'un quelconque de
nombre de stations (600) associées au second nœud de réseau radio (AP2) ; et
utilisation de canal.

17. Premier nœud de réseau radio (AP1, 200) selon l'une quelconque des revendications 12 à 14, agencé pour déterminer l'indication sur la charge de trafic à partir d'une interface de signalisation (210, 212) entre le premier nœud de réseau radio (AP1, 200) et le second nœud de réseau radio (AP2).

18. Premier nœud de réseau radio (AP1, 200) selon l'une quelconque des revendications 12 à 17, dans lequel la détermination de la direction pour un zéro comprend la priorisation d'une direction, parmi des directions vers une pluralité de noeuds de réseau voisins (AP2, AP3), dans lequel la priorisation comprend la priorisation de la direction sur la base de la distance estimée d'un nœud de réseau radio voisin (AP2, AP3) sur la base de la réception de la balise, par l'émetteur-récepteur (204), depuis le nœud de réseau radio voisin (AP2, AP3), dans lequel une distance estimée plus petite est priorisée sur une distance estimée plus grande.

19. Premier nœud de réseau radio (AP1, 200) selon l'une quelconque des revendications 12 à 18, dans lequel chacun du premier nœud de réseau radio (AP1, 200) et du second nœud de réseau radio voisin (AP2) forme un ensemble de service de base, BSS, et le premier nœud de réseau (AP1, 200) et le second nœud de réseau (AP2) forment un BSS de chevauchement, OBSS, dans un système de communications pour un service de réseau local sans fil.

20. Premier nœud de réseau radio (AP1, 200) selon l'une quelconque des revendications 12 à 19, dans lequel pour des transmissions omnidirectionnelles utilisant une diversité de retard cyclique, le premier nœud de réseau radio (AP1, 200) est agencé pour
attribuer un zéro dans la direction déterminée (602) pour le zéro ; et
randomiser des sous-porteuses pour d'autres directions que l'au moins une direction pour le zéro.
